# EUROPEAN PATENT APPLICATION

(11) **EP 2 246 801 A1**
(43) Date of publication of application: **03.11.2010**
(21) Application number: 09713177.5
(22) Date of filing: 22.01.2009
(51) Int. Cl.: G06F 21/24, G06F 12/00, G06F 21/00

(54) **TERMINAL DEVICE, INFORMATION PROVISION SYSTEM, FILE ACCESS METHOD, AND DATA STRUCTURE**

(30) Priority: 22.02.2008 JP 2008042023
(71) Applicant: Sony Computer Entertainment Inc., Minato-ku Tokyo 107-0062 (JP)
(72) Inventor: NISHINA, Eiichi, Tokyo 107-0062 (JP); YONEYAMA, Jun, Tokyo 107-0062 (JP); KISHI, Noriko, Tokyo 107-0062 (JP)
(74) Representative: Turner, James Arthur
(86) International application number: PCT/JP2009/000242
(87) International publication number: WO 2009/104352

(57) **Abstract**

An address information acquiring unit (74) acquires address information on an initial page used to shift to a selection page and address information on the selection page of a data file. An encryption processor (116) encrypts the address information on the selection page by using the identification information on a terminal apparatus (10), and a memory unit (100) stores the encrypted address information. A decoding processor (118) decodes the encrypted address information, and an access address determining unit (124) determines, as an address to be accessed, either the address information on the initial page or the address information on the selection page according to the result of decoding by the decoding processor (118).

## Description

### [Technical Field]

The present invention relates to a communication technology for communicating information via a network.

### [Background Art]

In recent years, information providing services have been in operation that allow terminal apparatus to download data files from servers connected to the Internet. Patent Document 1 discloses a portable game device capable of acquiring content information from a server apparatus. Generally, in a download service, an information providing server first presents a use permission page on a terminal apparatus, and a user then enters a predetermined input through the terminal apparatus so as to receive a use permission from the information providing server and thereupon have a download page for a data file presented on the terminal apparatus.

For a user who has once received a use permission, it is quite troublesome to have to perform a procedure for a use permission again when he/she accesses the information providing server the next time. Normally, therefore, the arrangement is such that the terminal apparatus stores the address of the download page once a use permission is received and thus the download page can be accessed directly using the stored address in the subsequent accesses to the information providing server.
[Patent Document 1] United States Patent Application Publication No. US2006/0277472

### [Disclosure of Invention]

### [Problems to be Solved by the Invention]

It is a common practice that users exchange data with each other. If the address of a download page stored by a terminal apparatus is copied by another terminal apparatus, it will be possible that the download page can be accessed directly from the other terminal apparatus without going through the use permission page. This, however, can lead to an unwelcome situation in which users who have not received a use permission can access the download page freely and therefore the data file may be distributed without limitation.

In view of such circumstances, a purpose of the present invention is to provide a technology which can efficiently realize a limitation on accesses to data files.

### [Means for Solving the Problem]

In order to resolve the above problem, one embodiment of the present invention provides a terminal apparatus to be connected to an information providing server on a network, and the terminal apparatus comprises: an acquisition unit which acquires address information on a first screen layout file for generating an initial page used to shift to a selection page of a data file and address information on a second screen layout file for generating the selection page of a data file; an encryption processor which encrypts the address information on the second screen layout file by using identification information on the terminal apparatus; and a memory unit which stores the address information on the first screen layout file and the encrypted address information on the second screen layout file.

Another embodiment of the present invention provides a terminal apparatus to be connected to an information providing server on a network, and the terminal apparatus comprises: an acquisition unit which acquires address information on a first screen layout file for generating an initial page used to shift to a selection page of a data file and encrypted address information on a second screen layout file for generating the selection page of a data file; a memory unit which stores the address information on the first screen layout file and the encrypted address information on the second screen layout file; a decoding processor which decodes the address information on the second screen layout file read out from the memory unit by using identification information on the terminal apparatus; an input receiver which receives a request for access to the second screen layout file from a user; an access address determining unit which determines the address information on the first screen layout file as an address to be accessed, when the decoding processor fails to decode the address information; a communication control unit which accesses the determined access address; a screen generator which generates a display screen based on the screen layout file received by the communication control unit; and a screen display unit which displays the generated screen.

Still another embodiment of the present invention provides an information providing system comprising a terminal apparatus and an information providing server connected via a network, and the information providing server includes: a storage which stores a first screen layout file for generating an initial page used to shift to a selection page of a data file, a second screen layout file for generating the selection page of a data file, and one or more data files; and a first communication control unit which transmits a file to the terminal apparatus from the storage according to an access from the terminal apparatus, and the terminal apparatus includes: a memory unit which stores the address information on the first screen layout file and the encrypted address information on the second screen layout file; a decoding processor which decodes the address information on the second screen layout file read out from the memory unit by using identification information on the terminal apparatus; an input receiver which receives a request for access to the second screen layout file from a user; an access address determining unit which determines the address information on the first screen layout file as an address to be accessed, when the decoding processor fails to decode the address information; and a second communication control unit which accesses the determined access address.

Still another embodiment of the present invention provides a method for accessing a file in an information providing server from a terminal apparatus, and the file access method comprises: acquiring address information on a first screen layout file for generating an initial page used to shift to a selection page of a data file; acquiring address information on a second screen layout file for generating the selection page of a data file; encrypting the address information on the second screen layout file by using identification information on the terminal apparatus; storing the address information on the first screen layout file and the encrypted address information on the second screen layout file in a memory unit; decoding the address information on the second screen layout file read out from the memory unit by using the identification information on the terminal apparatus; receiving a request for access to the second screen layout file from a user; determining, as an address to be accessed, either the address information on the first screen layout file or the address information on the second screen layout file according to a result of the decoding; and accessing the determined access address.

Still another embodiment of the present invention provides a method for accessing a file in an information providing server from a terminal apparatus, and the file access method comprises: acquiring address information on a first screen layout file for generating an initial page used to shift to a selection page of a data file; acquiring encrypted address information on a second screen layout file for generating the selection page of a data file; storing the address information on the first screen layout file and the encrypted address information on the second screen layout file in a memory unit; decoding the address information on the second screen layout file read out from the memory unit by using identification information on the terminal apparatus; receiving a request for access to the second screen layout file from a user; determining the address information on the first screen layout file as an address to be accessed, when the decoding fails; and accessing the determined access address.

Still another embodiment of the present invention provides a data structure of a screen layout file for generating a selection page of a data file, and the data structure allows a computer to have a memory unit store information on an address to be accessed and the data structure includes: address information on a screen layout file for generating an initial page, used to shift to the selection page, by a computer; address information on one or more data files; and encryption instruction information which instructs to encrypt the address information on the screen layout file for the selection page and have the encrypted address information stored in the memory unit, wherein when it is determined by the computer that the encryption instruction information is contained, the address information on the screen layout file for the selection file is encrypted and, the encrypted address information and address information on plain text of the screen layout file for the initial page are stored in the memory unit.

Optional combinations of the aforementioned constituting elements described above, and implementations of the invention in the form of methods, apparatuses, systems, recording media, computer programs and so forth may also be effective as additional modes of the present invention.

### [Brief Description of Drawings]

FIG. 1 shows a structure of an information providing system according to an exemplary embodiment.
FIG. 2 shows a structure of an information providing server.
FIG. 3 shows an external structure of a communication terminal apparatus.
FIG. 4 shows a structure of a communication terminal apparatus.
FIG. 5 shows an example of a first screen layout file.
FIG. 6 shows an initial page generated based on a first screen layout file.
FIG. 7 shows an example of a second screen layout file.
FIG. 8 shows a data file selection page generated based on a second screen layout file.
FIG. 9 is a flowchart showing a procedure for downloading a data file.
FIG. 10 shows a list screen of a registered RSS page (selection page).
FIG. 11 is a flowchart showing a procedure for downloading a data file.
FIG. 12 shows a list screen of an RSS page (selection page).
FIG. 13 shows an operation screen of RSS registration.

### [Explanation of Reference Numerals]

- 1: Information providing system
- 10: Communication terminal apparatus
- 12: Access point
- 14: Network
- 16: Web server
- 18: Distribution server
- 20: Information providing server
- 22: Communication interface
- 24: Communication control unit
- 26: Read/write control unit
- 32: Storage
- 34: First screen layout file
- 36: Second screen layout file
- 38: Data file
- 40: Screen display unit
- 42: Audio output unit
- 44: Control module
- 50: Input receiver
- 52: Media drive
- 54: Read/write control unit
- 60: Communication control unit
- 62: USB interface
- 64: Wireless interface
- 66: Communication interface
- 70: Data processing unit
- 72: Screen generator
- 74: Address information acquiring unit
- 76: Storage processor
- 80: User information holding unit
- 82: Terminal ID holding unit
- 100: Memory unit
- 102: Recording medium
- 110: Address information processing unit
- 112: Address information receiver
- 114: Data conversion unit
- 116: Encryption processor
- 118: Decoding processor
- 120: Address information read unit
- 122: Address information write unit
- 124: Access address determining unit
- 130: Mark

### [Best Mode for Carrying Out the Invention]

An information providing system according to an exemplary embodiment of the present invention realizes an environment for connecting a communication terminal apparatus to an information providing server on a network such as the Internet. The information providing server includes a Web server that provides a screen layout file written in languages such as HTML (HyperText Markup Language) and XML (Extensible Markup Language) to a user's communication terminal apparatus and a distribution server of a data file written in the screen layout file. The Web server provides an RSS (RDF Site Summary or Rich Site Summary or Really Simple Syndication) file describing address information, update time, and the like of one or more data files and also provides a use permission file to be accessed by a user as a prerequisite for presentation of the RSS file. Upon receipt of the RSS file, the communication terminal apparatus can open a data file selection page (download page) on the screen.

It is to be noted that while the Web server which provides a screen layout file and the distribution server which provides a data file itself may be configured as different servers, they may also be configured as one and the same server. The communication terminal apparatus receives a use permission page from a Web server and then acquires an RSS file upon the entry of a predetermined input by the user. The communication terminal apparatus stores the address information on the RSS file (hereinafter referred to as "RSS registration" also), and can directly access a selection page of a data file (RSS page) in the subsequent accesses without going through the use permission page. The selection page of a data file displays, for example, titles of a plurality of data files, so that the user can download a data file corresponding to a desired title by selecting it.

The data file may be that of a game application. For instance, the data file may be a trial version of a game program or may also be follow-up data of a game already in distribution. The follow-up data includes scenario data to increase the variation in game progression and also character data and item data in a new game. The data file is not limited to game applications, but may be that of other types. For example, the present information providing system may be suitably used in such a case where a network environment in which friends view photos among themselves is to be realized.

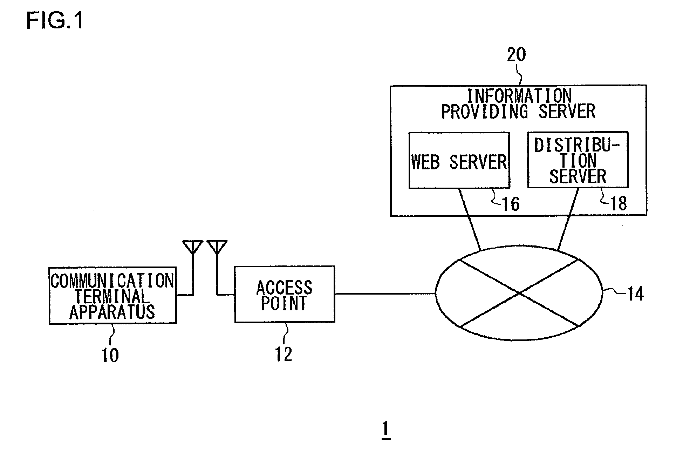

FIG. 1 shows a structure of an information providing system 1 according to an exemplary embodiment. The information providing system 1 includes a communication terminal apparatus 10, an access point 12 to connect with the communication terminal apparatus 10 by a wireless LAN (Local Area Network), and an information providing server 20 to connect with the access point 12 via a network 14. The information providing server 20 has a Web server 16 providing a screen layout file and a distribution server 18 providing a data file. It is assumed that in the information providing system 1, the Web server 16 and the distribution server 18 are often managed by the same entity. Hence, it may be so arranged that the Web server 16 and the distribution server 18 are configured as a single server. Note also that there may be a plurality of information providing servers 20.

The communication terminal apparatus 10, which is organized with communication functions, has a communication function using a wireless LAN scheme and a communication function for connecting with an external equipment by a USB (Universal Serial Bus) cable. Note that the communication terminal apparatus 10 may have a communication function using other wireless communication schemes and/or other wired communication schemes. Furthermore, the communication terminal apparatus 10 has a function of transmitting data to and receiving data from a removable memory unit and also a function of reading data from a ROM (Read Only Memory).

The access point 12 connects a communication terminal apparatus 10 to another communication terminal apparatus by a wireless LAN, or connects a communication terminal apparatus 10 to another access point by a wireless LAN, or further functions as a relay unit for connecting the communication terminal apparatus 10 to a network 14 such as the Internet or a wired LAN. In the information providing system 1, the communication terminal apparatus 10 can be connected to the information providing server 20 through the access point 12. Also, the communication terminal apparatus 10 can be connected to the information providing server 20 by using, for instance, a PC (personal computer) or the like connected to the network 14 as a relay unit.

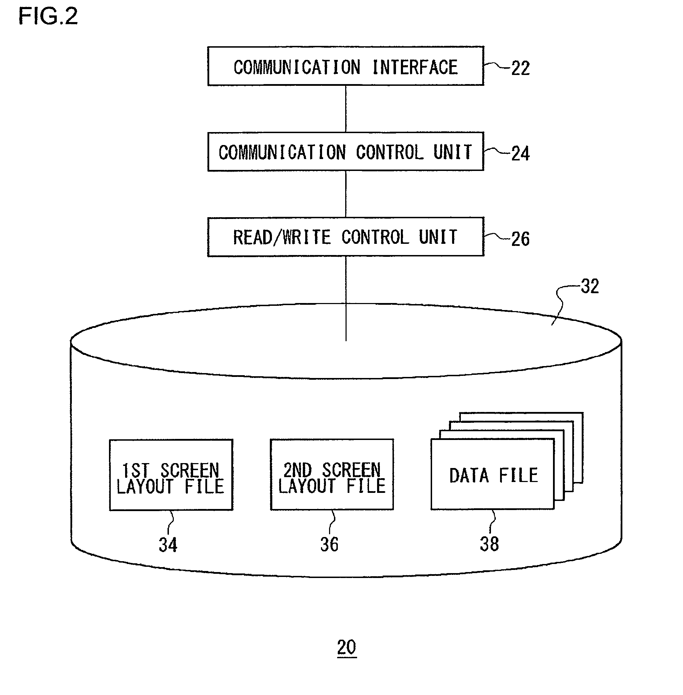

FIG. 2 shows a structure of an information providing server 20. FIG. 2 shows a state in which a Web server 16 and a distribution server 18 are configured as a single server. The information providing server 20 comprises a communication interface 22, a communication control unit 24, a read/write control unit 26, and a storage 32. The storage 32 stores one or more data files 38. In an information providing system 1 that provides information concerning games, the storage 32 stores data files of trial versions of game programs, follow-up data of games, and the like. The storage 32 stores a first screen layout file 34 for generating an initial page used to shift to a selection page of data files 38 and a second screen layout file 36 for generating the selection page of data files 38.

The communication control unit 24 controls communications with the communication terminal apparatus 10 via the communication interface 22. As the communication control unit 24 receives a file transmission request from the communication terminal apparatus 10, the read/write control unit 26 reads out a file to be transmitted, from address information contained in the transmission request and sends it to the communication control unit 24. Note that the address information is information specifying a directory and a file name in the storage 32. The communication control unit 24 transmits a file read out from the storage 32 to the communication terminal apparatus 10 via the communication interface 22.

It is to be noted that FIG. 2 represents a case where the Web server 16 and the distribution server 18 are configured as a single server, but they may be configured as separate servers. In the latter case, the Web server 16 holds a first screen layout file 34 and a second screen layout file 36 in its own storage unit, and the distribution server 18 holds data files 38 in its own storage unit. Note, however, that even when they are configured as separate servers, the Web server 16 and the distribution server 18 constitute a single information providing server 20.

In the present exemplary embodiment, the address information on the first screen layout file 34 may be made available to the end users and the initial page may be a use permission page offered to a user who desires to download a data file 38. On the other hand, in the information providing system 1, it is so arranged that the second screen layout file 36 cannot be accessed by the user unless he/she goes through the use permission page once and also, even if an access has been made through the use permission page, the address information on the second screen layout file 36 is not displayed on the communication terminal apparatus 10. Therefore, the user cannot normally get to know the address information on the second screen layout file 36, and hence he/she cannot obtain the second screen layout file 36 by inputting the address information on the second screen layout file 36 to the communication terminal apparatus 10.

Upon receipt of an input of address information on the first screen layout file 34 from the user, the communication terminal apparatus 10 accesses and obtains the first screen layout file 34 and has the initial page displayed on the screen using a browsing software such as a browser or viewer. The communication terminal apparatus 10 can access the second screen layout file 36 for the first time when it has received a predetermined input from the user in response to the initial page.

Upon acquisition of the second screen layout file 36, the communication terminal apparatus 10 has the selection page of data files 38 displayed on the screen using a browsing software such as a browser or viewer. The selection page is organized in such a manner as to include a list of data files that can be downloaded by the communication terminal apparatus 10, and the user can download a desired data file 38 by selecting the data file 38. The second screen layout file 36, which may be an RSS file, is of a structure containing titles of one of more data files, release dates, address information (URL: Uniform Resource Locator) showing the storage locations of the data files, and the like. Upon receipt of a distribution request from the communication terminal apparatus 10, the distribution server 18 distributes the data file 38 to the communication terminal apparatus 10.

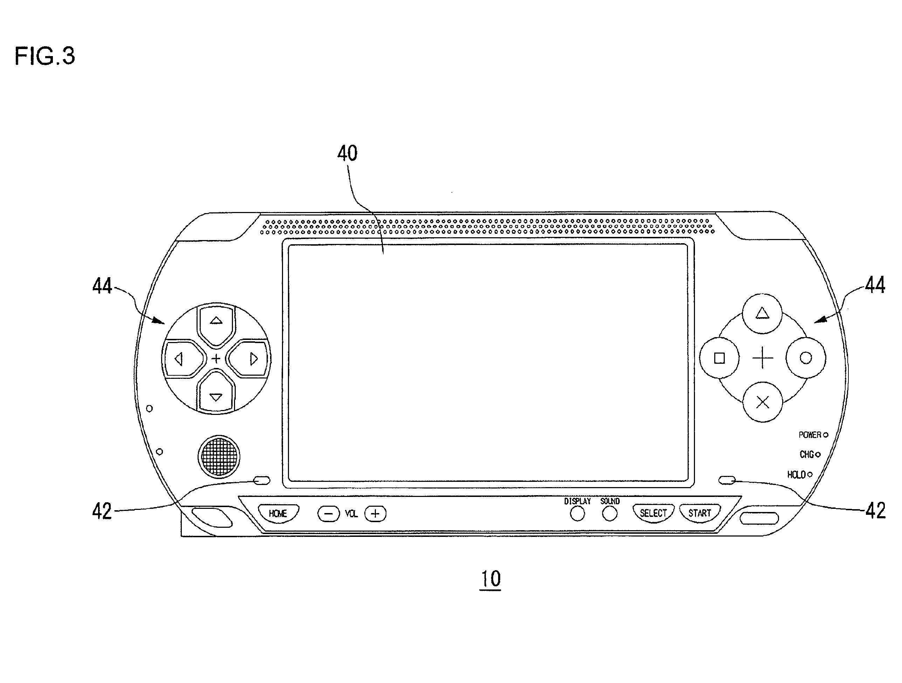

FIG. 3 shows an external structure of a communication terminal apparatus 10. The communication terminal apparatus 10 is equipped with a screen display unit 40 for displaying images, graphical user interface and the like, an audio output unit 42 for outputting sounds, and a control module 44 for receiving control inputs from the user. The screen display unit 40 may be a liquid crystal display, and the audio output unit 42 may be a speaker. The control module 44 includes arrow keys and four kinds of buttons ("o" (circle) button, "x" (cross) button, "□" (square) button, and "△" (triangle) button) provided on the front surface of a casing and buttons provided on the side of the casing.

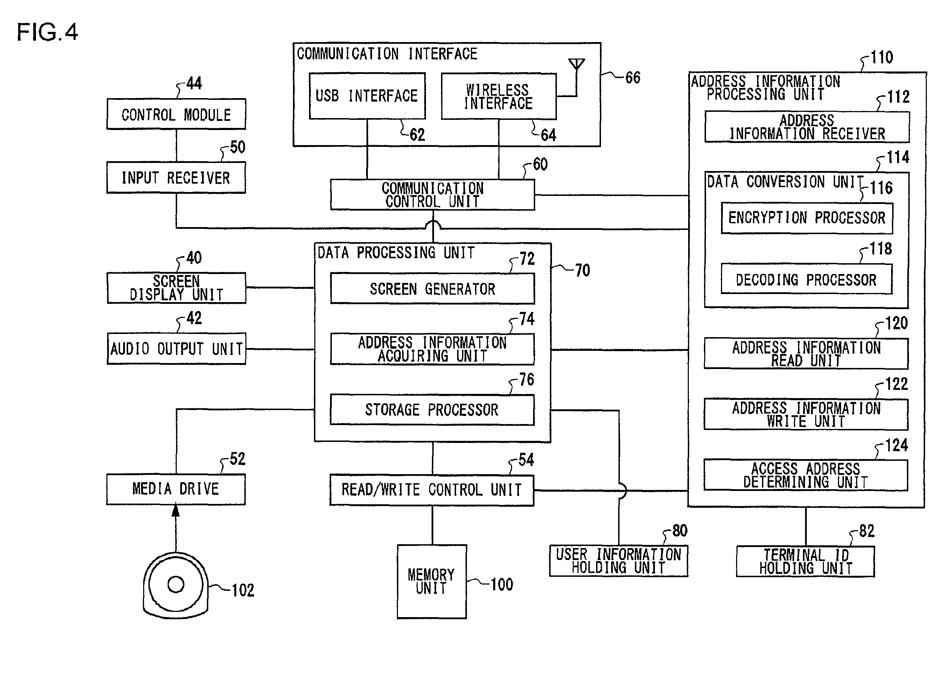

FIG. 4 shows a structure of a communication terminal apparatus 10. The communication terminal apparatus 10, which has the screen display unit 40, the audio output unit 42, and the control module 44, further includes an input receiver 50, a media drive 52, a read/write control unit 54, a communication control unit 60, a communication interface 66, a data processing unit 70, a user information holding unit 80, a terminal ID holding unit 82, and an address information processing unit 110. The communication terminal apparatus 10, which is organized with a function for accessing the information providing server 20, may be further equipped with other functions. For example, the communication terminal apparatus 10 may have a function for executing a game application or may be organized with a schedule management function, a computing function or the like.

The communication interface 66, which has a USB interface 62 and a wireless interface 64, transmits information to and receives information from external apparatuses such as an information providing server 20, terminal apparatus and the like. The media drive 52 is a drive unit which, with a recording medium 102 installed, drives and recognizes the recording medium 102 and reads necessary data from it. The recording medium 102, which may be a medium such as an optical disk or magneto-optical disk, records game software. The game software contains an execution program for executing a game and also address information (URL) to be used in downloading follow-up data. This address information is recorded in a predetermined area of the recording medium 102.

The read/write control unit 54 controls the reading and writing of data to and from a memory unit 100 which is detachably installed on the communication terminal apparatus 10. The data file 38 transmitted from the information providing server 20 is written into the memory unit 100 by the read/write control unit 54. When the data file is a trial version game program, the trial-version game can be executed by a not-shown game application processor.
It is to be noted that the memory unit 100 is not limited to a removable type and may be a built-in type such as a hard disk.

The user information holding unit 80 stores user information. The user information includes the birth date, sex, nickname, and the like of the user. The terminal ID holding unit 82 stores the identification information (ID) of the communication terminal apparatus 10. The terminal ID, which is predefined as a unique character string, does not mix with the IDs of the other terminal apparatuses. The terminal ID holding unit 82 may be constituted by a flash memory provided in the communication terminal apparatus 10.

The data processing unit 70 includes a screen generator 72, an address information acquiring unit 74, and a storage processor 76. The address information processing unit 110 includes an address information receiver 112, a data conversion unit 114, an address information read unit 120, an address information write unit 122, and an access address determining unit 124. The data conversion unit 114 has an encryption processor 116 and a decoding processor 118. The function of the communication terminal apparatus 10 is realized by the use of a CPU, memory, memory-loaded programs, and the like. Depicted herein are functional blocks realized by cooperation of those. Therefore, it will be understood by those skilled in the art that these functional blocks may be achieved by a variety of manners including hardware only, software only or a combination of both.

### <Data file download procedure from the state without a use permission>

A procedure for downloading a data file 38 from a state of the communication terminal apparatus 10 which has not yet received a use permission will be explained below. Note that the URL of a screen layout file stored in the storage 32 of the information providing server 20 is called the URL of the Web page also, so that the address information (URL) of the screen layout file may sometimes be expressed as the address information (URL) of the page hereinbelow.

The user enters the URL (http://www.example.com/index.html) of the initial page (use permission page) in the communication terminal apparatus 10 by operating the control module 44. Upon receipt of the URL of the initial page, the input receiver 50 supplies it to the address information receiver 112. Upon receipt of the URL of the initial page by the address information receiver 112, the access address determining unit 124 determines the URL of the initial page as the address to be accessed (access address). The access address determining unit 124 conveys the URL of the initial page to the communication control unit 60, and the communication control unit 60 accesses the first screen layout file 34 of the information providing server 20 via the communication interface 66.

In the information providing server 20, when the communication control unit 24 has received a request for access to the first screen layout file 34, the read/write control unit 26 reads out the first screen layout file 34 using the address information contained in the access request. The communication control unit 24 transmits the read-out first screen layout file 34 to the communication terminal apparatus 10 via the communication interface 22.

Note that the arrangement may be such that the information providing server 20 determines the terminal type of the communication terminal apparatus 10 which has sent the access request and, depending on the terminal type, does not transmit the first screen layout file 34. The information providing system 1 provides a scheme for limiting access to the data file 38, but if the communication terminal apparatus 10 does not have the function of non-display of a selection page URL, encryption of the selection page URL or the like, which will be discussed later, it does not allow the information providing server 20 to transmit the first screen layout file 34 to the terminal apparatus. This arrangement strengthens the function of access limitation of the information providing system 1. The terminal type may be determined by the use of information such as user agent contained in an access request, for instance.

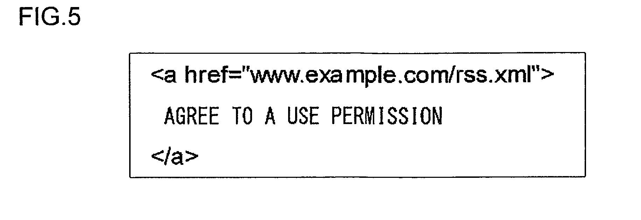

FIG. 5 shows an example of the first screen layout file 34. The first screen layout file 34 is configured by including the address information (www.example.com/rss.xml) on the second screen layout file 36.

In the communication terminal apparatus 10, the communication control unit 60 receives the first screen layout file 34 and supplies it to the data processing unit 70. The screen generator 72, which is a browser, generates an initial page based on the first screen layout file 34. The screen generator 72 has the generated initial page displayed on the screen display unit 40.

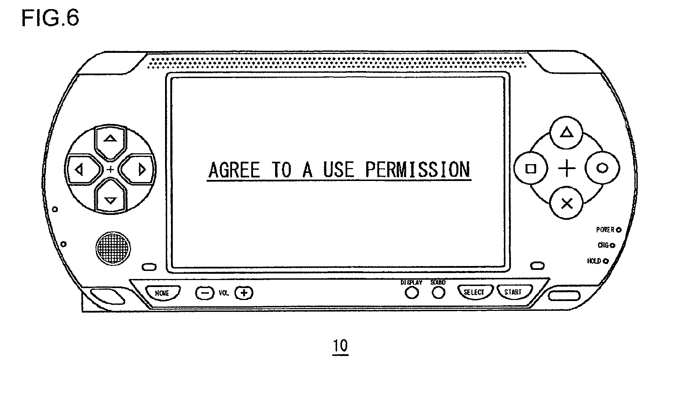

FIG. 6 shows an initial page generated based on the first screen layout file 34. Displayed on the initial page is a message: "AGREE TO A USE PERMISSION". Linked to this message is the URL of the second screen layout file 36, which is a selection page of data files. As the user selects this message and presses a predetermined button (the circle button, for instance) by operating the control module 44, the operation input information is supplied to the address information receiver 112. As the address information receiver 112 receives the URL of the selection page contained in the operation input information, the access address determining unit 124 determines the URL of the selection page as the address to be accessed. The access address determining unit 124 conveys the URL of the selection page to the communication control unit 60, and the communication control unit 60 accesses the second screen layout file 36 of the information providing server 20 via the communication interface 66.

Note that, in the example shown in FIG. 6, the initial page has a link to the URL of the selection page and thus selection of the message enables direct access to the second screen layout file 36. However, other procedures may be employed to enhance the effectiveness of use permission. For example, the arrangement may be such that at the selection of the message by the user, the agreement information indicating the user's agreement to the use permission is transmitted to the information providing server 20, and upon confirmation of the agreement information by the information providing server 20, the URL of the selection page is transmitted to the communication terminal apparatus 10. When confirming the agreement information, the information providing server 20 may determine the terminal type of the communication terminal apparatus 10 and, depending on the terminal type, may not transmit the URL of the selection page. As the communication control unit 60 receives the URL of the selection page, the access address determining unit 124 determines the URL as the address to be accessed, and the communication control unit 60 accesses the second screen layout file 36 of the information providing server 20 via the communication interface 66.

In the information providing server 20, as the communication control unit 24 receives a request for access to the second screen layout file 36, the read/write control unit 26 reads out the second screen layout file 36 from the address information contained in the access request. The communication control unit 24 transmits the second screen layout file 36 thus read out to the communication terminal apparatus 10 from the communication interface 22.

Note that the information providing server 20 may determine the terminal type of the communication terminal apparatus 10 which has sent the access request and, depending on the terminal type, may not transmit the second screen layout file 36. Where the communication terminal apparatus 10 does not have a reader function capable of processing an RSS format of the second screen layout file 36, the information providing server 20 is not allowed to transmit the second screen layout file 36 to the terminal apparatus. This arrangement strengthens the function of access limitation of the information providing system 1. The terminal type may be determined by the use of information such as user agent contained in an access request, for instance.

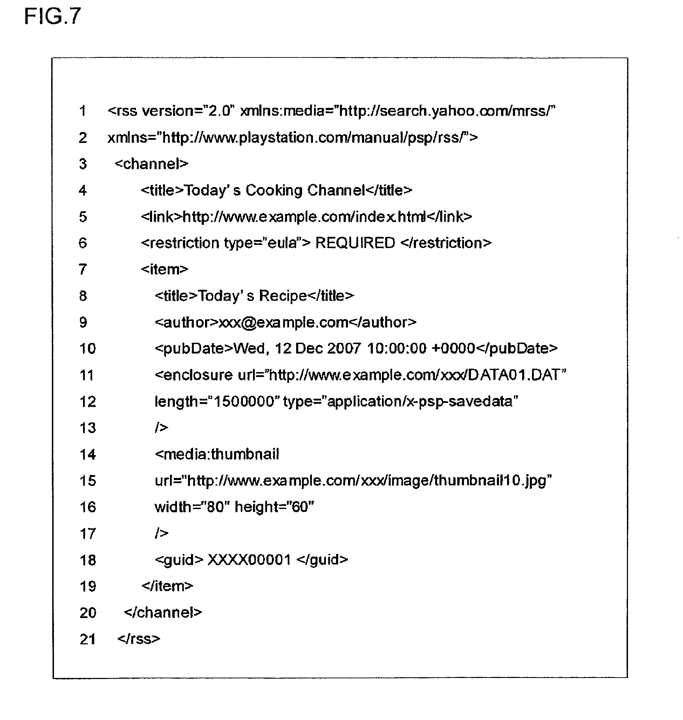

FIG. 7 shows an example of a second screen layout file 36. The second screen layout file 36 is generated as an RSS file. In FIG. 7, the numbers in the left column, which represent line numbers, are entered there for the explanation of the exemplary embodiment.

The second screen layout file 36 is structured by implementing a data structure that allows the computer, namely, the communication terminal apparatus 10, to have the memory unit 100 store the information on the address to be accessed. The data structure contains address information on the first screen layout file 34 to have the communication terminal apparatus 10 generate the initial page, address information on one or more data files 38, and encryption instruction information for instructing encryption of the address information on the second screen layout file 36 for the selection page and storage of it in the memory unit 100.

In the second screen layout file 36, a description indicating an RSS file is presented on line 1, and information on a tag set is described on lines 1 and 2. Described from <channel> on line 3 to </channel> on line 20 is channel information on the RSS file, with title information on the channel described on line 4 and address information on the first screen layout file 34 (http://www.example.com/index.html) described on line 5. Described on line 6 is encryption instruction information (REQUIRED) indicating that the address information on the second screen layout file 36 must be encrypted. As the communication terminal apparatus 10 determines that encryption instruction information (REQUIRED) is contained, the address information on the second screen layout file 36 for the selection page is encrypted, and the encrypted address information and the address information in plain text on the first screen layout file 34 for the initial page (line 5) are stored in the memory unit 100. On the other hand, if the communication terminal apparatus 10 determines that encryption instruction information is not contained, the address information on the second screen layout file 36 is not encrypted, and is stored in the memory unit 100 together with the address information on the first screen layout file 34 in plain text.

Described from <item> on line 7 to </item> on line 19 is accompanying information on a data file to be downloaded. Where there are a plurality of data files, accompanying information on a plurality of data files is described using item tags. The title information on the data file is described on line 8, and the address information on the data file is described on line 11. In this manner, the second screen layout file 36 is configured by including the address information (line 5) on the first screen layout file 34 and the address information (line 11) on the data file 38. Also, thumbnail information is described from line 14 to line 17. The ID (XXXX00001) of a game application is described on line 18.

In the communication terminal apparatus 10, the communication control unit 60 receives a second screen layout file 36 and supplies the received second layout file 36 to the data processing unit 70. The address information acquiring unit 74 acquires both address information on the first screen layout file 34 contained in the second screen layout file 36 and address information on the second screen layout file 36. The address information acquiring unit 74 acquires the address information on the second screen layout file 36 in a manner such that the second screen layout file 36 shown in FIG. 7 is parsed to detect an RSS tag and thereby determined to be an RSS file.

Since the address information on the second screen layout file 36 has already been identified at the time the second layout file 36 is accessed, the address information acquiring unit 74 may acquire the address information on the second layout file 36 at that time. Also, since the address information on the first screen layout file 34 has already been identified at the time the second layout file 34 is accessed, the address information acquiring unit 74 may acquire the address information on the first layout file 34 at that time. The address information acquiring unit 74 supplies the address information on the first screen layout file 34 and the address information on the second screen layout file 36 to the address information processing unit 110. Based on the encryption instruction information described in line 6 in FIG. 7, the address information acquiring unit 74 also supplies encryption instruction information indicating that the address information on the second screen layout file 36 needs to be encrypted, to the address information processing unit 110.

As the address information receiver 112 receives the address information on the first screen layout file 34, the address information on the second screen layout file 36 and the encryption instruction information, the address information receiver 112 supplies the address information on the second screen layout file 36 to the encryption processor 116. The encryption processor 116 reads out the terminal ID from the terminal ID holding unit 82 so as to encrypt the address information on the second layout file 36 using the terminal ID. The address information write unit 122 writes the address information on the first screen layout file 34 and the encrypted address information on the second screen layout file 36 to the memory unit 100 by way of the read/write control unit 54. Note that the address information on the first screen layout file 34 is not subjected to encryption processing and thus remains as plain text. At this time, the title information on an RSS channel (line 4 in FIG. 7), which remains also as plain text, is written into the memory unit 100. Though not shown in FIG. 7, if the thumbnail information on an RSS channel is contained in the second screen layout file 36 (RSS file), thumbnail images may also be written directly into the memory unit 100 in the form of plain text. The address information on the first screen layout file 34, the encrypted address information on the second screen layout file 36, the title information and thumbnail images of the second screen layout file 36 are stored in the memory unit 100 in a manner such that they are mutually bound to (associated with) one another. This completes RSS registration, and these bound (associated) data are hereinafter called "RSS registration information".

When the communication control unit 60 supplies the second screen layout file 36 to the data processing unit 70, the screen generator 72 generates a selection page of data files based on the second screen layout file 36. The screen generator 72 has the thus generated selection page displayed on the screen display unit 40.

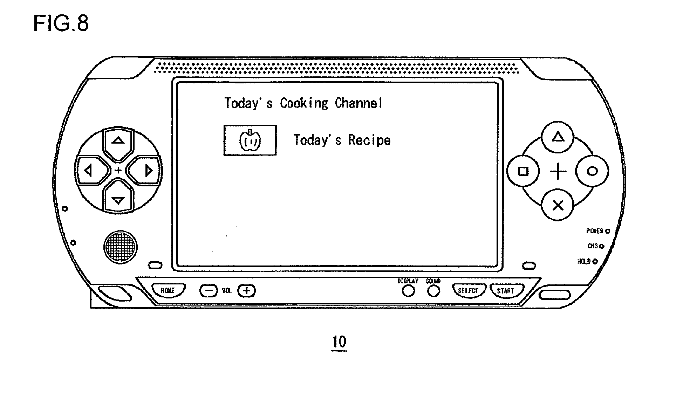

FIG. 8 shows a selection page generated based on the second screen layout file 36. The title information and thumbnail images (not shown in FIG. 7) of the RSS channel (RSS file) described in line 4 of the RSS file are displayed on the selection page.

The screen generator 72 may not allow item information on game applications, which the user does not have, to be included in the selection page by referencing the ID of said item (line 18 in FIG. 7). Though discussed later, as the communication terminal apparatus 10 starts a game application, the communication terminal apparatus 10 may generate a directory for saving data in the memory unit 10 based on the ID of the game. Thus, the screen generator 72 can determine, by referencing the directory name, whether the user has the game corresponding to the item or not. If the user does not have the game corresponding to the item, the screen generator 72 will not allow the item information to be included in the selection page. If the data file 38 is follow-up data of the game, there will be no need to download the follow-up data of the game that the user does not have. Hence, the screen generator 72 does not allow the item information on such follow-up data of the game, which the user does not have, to be included in the selection page, thus disabling the user from downloading the follow-up data.

On the other hand, if the data file is a trial version of a game program, it will be preferable that such a program be downloaded by as many as user as possible. In the light of this, the screen generator 72 determines the file type of the second screen layout file 36 based on the information of an extension in line 11 of the second screen layout file 36 or the information of the file type in line 12. And an arrangement may be such that if the data file is a program file, the screen generator 72 allows it to be included in the selection page regardless of the ID information of the game.

There may be cases where it is desirable that the viewing limitation be imposed on the age of users depending on the type of a data file. Though not included in the second screen layout file 36 shown in FIG. 7, age information with which to restrict the viewing may be included in the item information. In such a case, the screen generator 72 reads out the information of birth date of a user from the user information holding unit 80 and calculates the present age of the user. If the user information holding unit 80 holds the information of present ages, the user information holding unit 80 needs only to read out said information. The screen generator 72 compares the present age against the age information, with which to restrict the viewing, contained in the item information. As a result of the comparison, if the age is below or equal to the parental level age, the screen generator 72 does not allow the item information to be included in the selection page. Though the age restriction information due to parental lock is sometimes embedded in the data file 38, the screen generator 72 sets the age restriction (parental level) based on the age information contained in the second screen layout file 36, so that the downloading of the data file 38 itself can be prohibited. In this manner, the viewing restriction can be efficiently realized. Note that the screen generator 72 may compare the parental level set in the communication terminal apparatus 10 with the parental level information contained in the item information.

As the user selects a title displayed on the selection page and presses a predetermined button (the circle button, for instance) by operating the control module 44, the input receiver 50 receives a selection input of the data file 38 and then selection input information is supplied to the address information receiver 112. The input receiver 50 may have the URL of the selected data file 38 included in the selection input information. Also, the address information receiver 112 may acquire a URL within an <enclosure> tag, based on the selection input information. As the address information receiver 112 receives the URL of the data file 38, the access address determining unit 124 determines the URL of the data file 38 to be the access address. The access address determining unit 124 conveys the URL of the data file 38 to the communication control unit 60, and the communication control unit 60 accesses the data file 38 of the information providing server 20 via the communication interface 66.

In the information providing server 20, as the communication control unit 24 receives a request for access to the data file 38, the read/write control unit 26 reads out the data file 38 from address information contained in the access request. The communication control unit 24 transmits the read-out data file 38 from the communication interface 22 to the communication terminal apparatus 10.

In the communication terminal apparatus 10, the communication control unit 60 receives the data file 38, verifies the file attribute of the received data file 38, and supplies it to the data processing unit 70. The storage processor 76 creates a directory of the memory unit 100 based on the ID information on the data file 38 and then stores the data file 38 there. If the directory exists already, the data file 38 will be stored in said directory. This enables the communication terminal apparatus 10 to download a desired data file 38.

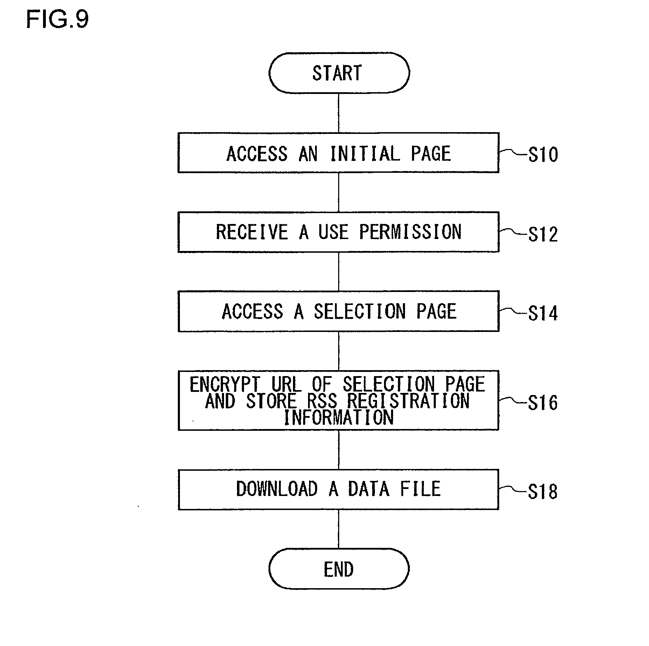

FIG. 9 is a flowchart showing a procedure for downloading a data file 38. As the input receiver 50 receives the URL of an initial page from the user, the communication control unit 60 accesses the initial page (S10). As the input receiver 50 receives a predetermined input in the initial page from the user and receives a use permission (S12), the communication control unit 60 accesses the selection page (S14). In an exemplary embodiment, the use permission is said to be granted and received if a message displayed on the initial page is selected and a button is depressed. At this time, the encryption processor 116 encrypts the URL of the selection page using the terminal ID, and the address information write unit 122 stores the encrypted URL of the selection page, the URL of plain text of the initial page, and the title information and thumbnail images of an RSS channel in the memory unit 100 as RSS registration information (S16). As the input receiver 50 receives a selection input of a data file in the selection page from the user, the communication control unit 60 accesses the selected data file so as to download it (S18).

### <Data file download procedure after RSS registration>

Next, a description is given of a procedure for downloading a data file 38 by the communication terminal apparatus 10 after an RSS registration has been completed. If the communication terminal apparatus 10 receives the use permission through the initial page and accesses the selection page, the memory unit 100 will be in a state where the RSS registration information is being stored therein. The user first operates the control modules 44, so that information on an RSS registered in the screen display unit 40 is displayed.

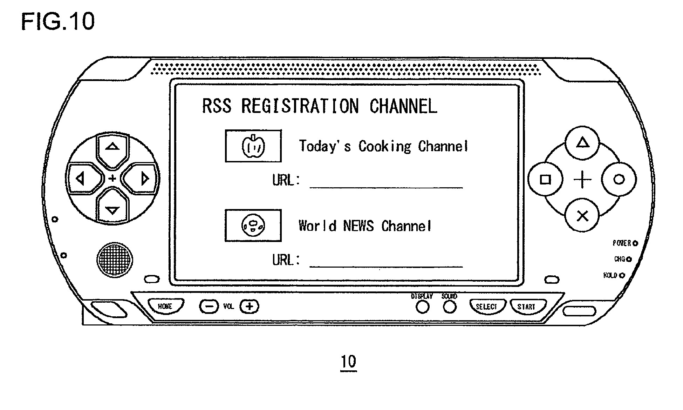

FIG. 10 shows a list screen of a registered RSS page (selection page). The selection pages of "Today's Cooking Channel" and "World NEWS channel" are registered here. The screen generator 72 generates a list screen of selection pages from the RSS registration information stored in the memory unit 100. At this time, the URLs of the encrypted selection pages contained in the RSS registration information are decoded by the decoding processor 118.

When the list screen of selection pages are generated, the input receiver 50 first receives a request for a display of the list screen of a selection page from the user and then supplies the display request to the address information processing unit 110. The address information read unit 120 reads out one or more pieces of registered RSS registration information from the memory unit 100. The decoding processor 118 acquires the encrypted address information on the second screen layout file 36 from the read-out RSS registration information and decodes it using the terminal ID stored in the terminal ID holding unit 82.
If the data conversion unit 114 that has performed the encryption processing performs decoding processing, the decoding of the address information will normally be successful. However, in such a case, for instance, where the terminal ID is corrupted, the decoding of the address information will fail. When the decoding has been completed successfully, the decoded address information in plain text is stored in the memory unit 100.

Even if the decoding processing performed by the decoding processor 118 has completed successfully, the screen generator 72 will generate a display screen in such a manner that the URL of the decoded selection page is not displayed thereon. Hiding the URL thereof keeps the URLs of the selection pages secret, so that the URLs of the selection pages are not revealed to users of communication terminal apparatuses to which the use permission is not granted.

In the state where the list screen of an RSS page as shown in FIG. 10 is being displayed, the user selects a desired RSS page by operating the control module 44. The input receiver 50 receives a request for access to the RSS page from the user and supplies the received request to the address information processing unit 110. As the access address determining unit 124 receives the access request, the access address determining unit 124 determines either the address information on the first screen layout file 34 or the address information on the second screen layout file 36 as the address to be accessed, according to the result of decoding by the decoding processor 118 at the time when the list screen was generated. The communication control unit 60 accesses the thus determined access address.

Specifically, if the decoding processor 118 succeeds in the decoding, the access address determining unit 124 will determine the address of the second screen layout file 36 as the address to be accessed. As a result, the communication terminal apparatus 10 can access the selection page of the data file 38 without going through the initial page. On the other hand, if the decoding processor 118 fails the decoding, the access address determining unit 124 will determine the address of the first screen layout file 34 as the address to be accessed and acquire address information on the first screen layout file 34. In a case that the decoding fails, the communication terminal apparatus 10 will need to access the selection page of the data file 38 through the initial page.

If the URL of the encrypted selection page has been decoded successfully, the communication control unit 60 transmits an access request to the second screen layout file 36. In the information providing server 20, as the communication control unit 24 receives the request for access to the second screen layout file 36, the read/write control unit 26 will read out the second screen layout file 36 from the address information contained in the access request. The communication control unit 24 transmits the read-out second screen layout file 36 to the communication terminal apparatus 10 from the communication interface 22. In so doing, the arrangement may be such that the information providing server 20 determines the terminal type of the communication terminal apparatus 10 and, depending on the terminal type, does not transmit the second screen layout file 36.

In the communication terminal apparatus 10, the communication control unit 60 receives the second screen layout file 36 and supplies it to the data processing unit 70. The screen generator 72 generates a selection page based on the second screen layout file 36. Note that the screen generator 72 generates a display screen in such a manner that the address information on the data file 38 is not displayed on the selection page. Hiding the address information thereof keeps the URLs of the data file 38 secret.

The address information acquiring unit 74 acquires the address information on the first screen layout file 34 contained in the second screen layout file 36 and also acquires the address information on the second screen layout file 36. The address information acquiring unit 74 determines if the acquired address information on the first screen layout file 34 has already been stored in the memory unit 100 as the RSS registration information or not. If the acquired address information thereof has already been stored therein, the address information acquiring unit 74 may discard the acquired address information. If, on the other hand, the acquired address information has already been stored therein but the second screen layout file 36 has been updated, the address information acquiring unit 74 may supply this acquired address information on the first screen layout file 34, the address information on the second screen layout file 36, and the instruction information on encryption processing to the address information receiver 112 so as to update the RSS registration information. The aforementioned method may be used as a method for generating the RSS registration information.

As the address information acquiring unit 74 acquires the address information on the first screen layout file 34 and the address information on the second screen layout file 36, the address information processing unit 100 may generate RSS registration information and overwrites the RSS registration information stored in the memory unit 100 without determining whether the second screen layout file 36 is updated or not. As a result, the address information processing unit 110 can have the memory unit 100 store the latest RSS registration information without determining whether the second screen layout file 36 is updated or not.

As the user selects a title displayed on the selection page and presses a predetermined button (the circle button, for instance) by operating the control module 44, the input receiver 50 receives the selection input of the data file 38 and then the selection input information is supplied to the address information receiver 112. As the address information receiver 112 receives the URL of the data file 38, the access address determining unit 124 determines the URL of the data file 38 to be the access address. The access address determining unit 124 conveys the URL of the data file 38 to the communication control unit 60, and the communication control unit 60 accesses the data file 38 of the information providing server 20 via the communication interface 66.

In the information providing server 20, as the communication control unit 24 receives a request for access to the data file 38, the read/write control unit 26 reads out the data file 38 from address information contained in the access request. The communication control unit 24 transmits the read-out data file 38 from the communication interface 22 to the communication terminal apparatus 10.

In the communication terminal apparatus 10, the communication control unit 60 receives the data file 38 and supplies it to the data processing unit 70. The storage processor 76 creates a directory of the memory unit 100 based on the ID information on the data file 38 and then stores the data file 38 there. If the directory exists already, the data file 38 will be stored in said directory. This enables the communication terminal apparatus 10 to download a desired data file 38 without going through the initial page if the encrypted address information on the second screen layout file 36 has been decoded successfully.

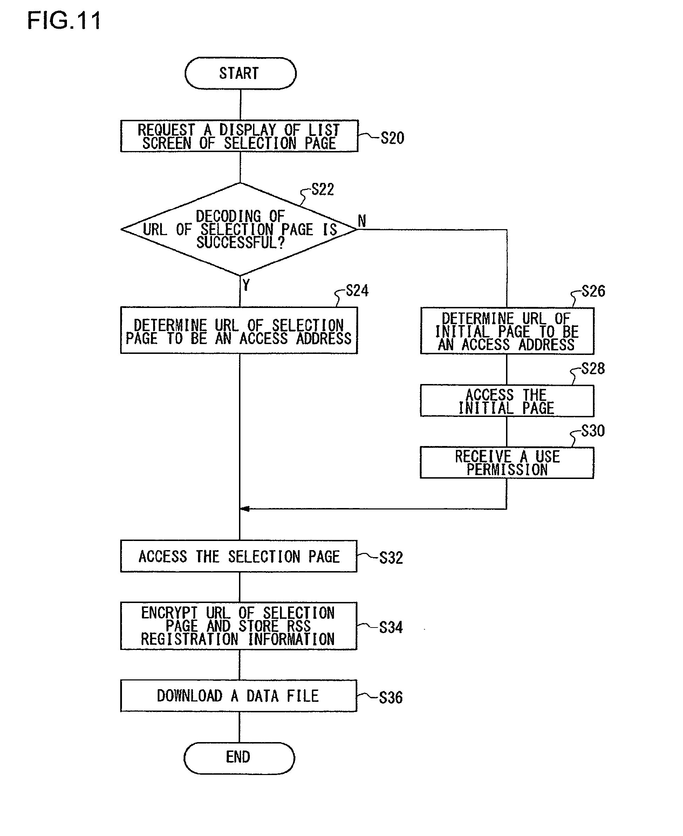

FIG. 11 is a flowchart showing a procedure for downloading a data file 38. As the input receiver 50 receives a request for a display of list screen of the selection page from the user (S20), the address information read unit 120 reads out RSS registration information from the memory unit 100, and the decoding processor 118 decodes the encrypted URL of the selection page using the terminal ID (S22). In so doing, the screen generator 72 generates a list screen, and the screen display unit 40 displays the list screen.

As the input receiver 50 receives a request for access to the selection page from the user and if the decoding processing is successful (Y of S22), the access address determining unit 124 determines the URL of the selection page to be the access address (S24) and the communication control unit 60 accesses the selection page (S32).

If, on the other hand, the decoding processing fails (N of S22), the access address determining unit 124 determines the URL of the initial page to be the access address (S26) and the communication control unit 60 access the initial page (S28). As the input receiver 50 receives a predetermined input for the initial page from the user and receives a use permission (S30), the communication control unit 60 accesses the selection page (S32). In the exemplary embodiment, the use permission is said to be granted and received if a message displayed on the initial page is selected and a button is depressed. The encryption processor 116 encrypts the URL of the selection page using the terminal ID. Then the address information write unit 122 saves the encrypted URL of the selection page, the URL of plain text of the initial page, and the title information and thumbnail images of an RSS channel in the memory unit 100 as the RSS registration information by overwriting the corresponding existing data therein (S34). Note that the address information write unit 122 may additionally store the RSS registration information in the memory unit 100. As the input receiver 50 receives a selection input of a data file for the selection page from the user, the communication control unit 60 accesses the selected data file so as to download it (S36).

### <Procedure for data file download from different communication terminal apparatuses>

Next, a description is given of a procedure for using the RSS registration information of a communication terminal apparatus to which a use permission has been given, in another communication terminal apparatus 10. For example, a communication terminal apparatus 10 acquires the RSS registration information generated by another communication terminal apparatus via the communication interface 66 and stores it in the memory unit 100. Since this communication terminal apparatus 10 is not granted the use permission, it is undesirable that the selection page of a data file be browsed without going through the initial page. Accordingly, the information providing system 1 is structured such that the downloading of the data file 38 is not possible unless the use permission has been granted, even if the address information acquiring unit 74 of the communication terminal apparatus 10, to which the use permission is not given, acquires the RSS registration information from another communication terminal apparatus and stores it in the memory unit 100.

The user operates the control module 44 to generate a request for a display of the list screen of the selection page. The input receiver 50 receives the request for a display of the list screen thereof from the user and supplies the request to the address information processing unit 110. The address information read unit 120 reads out one or more pieces of registered RSS registration information from the memory unit 100. The decoding processor 118 acquires the encrypted address information on the second screen layout file 36 from the read-out RSS registration information and decodes it using the terminal ID stored in the terminal ID holding unit 82. Here, the address information on the second screen layout file 36 contained in the RSS registration file is encrypted using the ID of another terminal apparatus. Hence, the decoding processor 118 cannot decode the address information and the decoding processing fails.

The screen generator 72 generates the list screen of the selection page, and the screen display unit 40 displays information on the registered RSS. The RSS registration information contains the title information and thumbnail images of an RSS channel in plain text. Thus, the screen generator 72 can generate a display screen that contains the title information and thumbnail images of an RSS channel even if the RSS registration information has been acquired from another communication terminal apparatus.

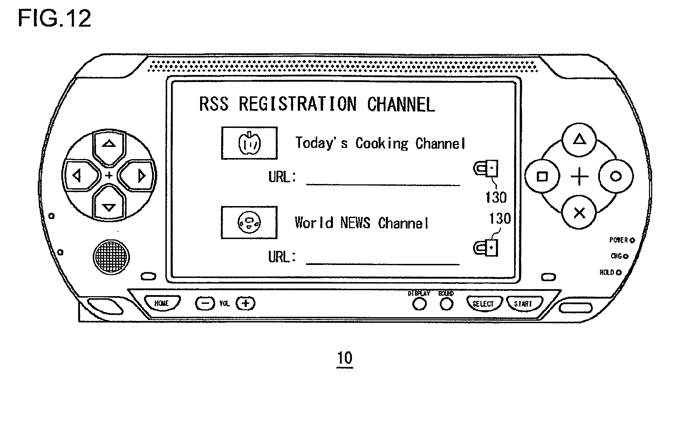

FIG. 12 shows a list screen of an RSS page (selection page). In this example, the RSS registration information of "Today's Cooking Channel" and "World NEWS Channel" is copied to the memory unit 100 from another communication terminal apparatus. The screen generator 72 generates the list screen of the selection page from the RSS registration information stored in the memory unit 100.
Since the communication terminal apparatus 10 is not granted a use permission with which to switch to the selection page of "Today's Cooking Channel", a mark 130 indicating accordingly is displayed (See FIG. 10). The screen generator 72 is notified of the fact that the decoding processor 118 has failed to decode the URL of the selection page, and generates a display screen where the mark 130 is appended to said RSS channel.

In the state where the list screen of an RSS page as shown in FIG. 12 is being displayed, the user selects a desired RSS page by operating the control module 44. The input receiver 50 receives a request for access to the RSS page of "Today's Cooking Channel", for example, from the user and supplies the received request to the address information processing unit 110. As the access address determining unit 124 receives the access request, the access address determining unit 124 determines either the address information on the first screen layout file 34 or the address information on the second screen layout file 36 as the access address, according to the result of decoding by the decoding processor 118 at the time when the list screen was generated. The communication control unit 60 accesses the thus determined access address.

Specifically, if the decoding processor 118 succeeds in the decoding, the access address determining unit 124 will determine the address of the second screen layout file 36 as the address to be accessed. On the other hand, if the decoding processor 118 fails the decoding, the access address determining unit 124 will determine the address of the first screen layout file 34 as the address to be accessed. In this case, the decoding processor 118 fails to perform the decoding processing, so that the access address determining unit 124 extracts the address information on the plain text of the first screen layout file 34 contained in the RSS registration information. The failure of decoding prompts the communication terminal apparatus 10 to access the selection page of the data file 38, which in turn requires the user of the communication terminal apparatus 10 to go through the initial page. The procedure performed by the communication terminal apparatus 10 for the downloading of the data file 38 follows the flow shown in FIG. 11. This can accomplish a scheme wherein in the information providing system 1 the communication terminal apparatus 10 accesses the initial page as a prerequisite for the downloading of the data file 38. The information providing system 1 restricts the access to the data file 38 using such a simple arrangement and structure.

Though a description has been given of a case where the address information on the second screen layout file 36 is acquired from the information providing server 20, the address information thereof may be acquired from other means. An example is hereinbelow shown where the address information on the first screen layout file 34 and the address information on the second screen layout file 36 are recorded in the recording medium 102. Note that encryption instruction information indicating that the address information on the second screen layout file 36 must be encrypted is also recorded in the recording medium 102.

The user starts a game execution program from the recording medium 102 mounted on the media drive 52 by operating the control module 44. A not-shown game application processor processes the execution program. When first starting the execution program, the game application processor prompts the user to operate the RSS registration.

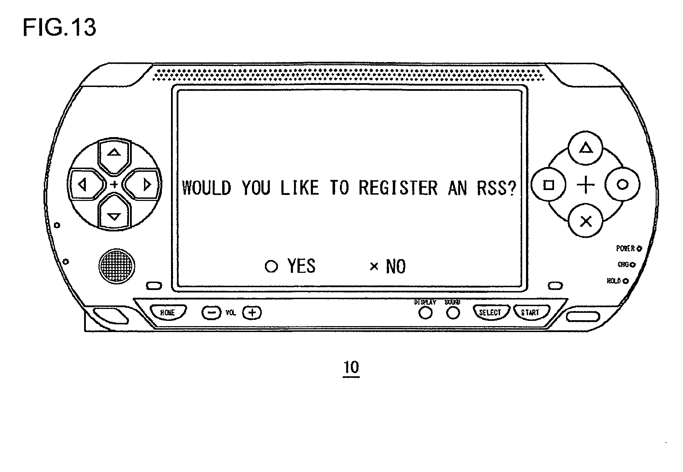

FIG. 13 shows an operation screen of RSS registration. Upon receipt of an instruction from the game application processor, the screen generator 72 generates an operation screen. When the user presses the circle button on this operation screen, the RSS registration processing starts.

As the address information acquiring unit 74 acquires the address information on the first screen layout file 34, the address information on the second screen layout file 36, and the encryption instruction information from the recording medium 102 via the media drive 52, the address information acquiring unit 74 supplies them to the address information processing unit 110. As the address information receiver 112 receives the address information on the first screen layout file 34, the address information on the second screen layout file 36, and the encryption instruction information, the address information receiver 112 supplies the address information on the second screen layout file 36 to the encryption processor 116. The encryption processor 116 reads out the terminal ID from the terminal ID holding unit 82 so as to encrypt the address information on the second screen layout file 36 using the terminal ID. The address information write unit 122 writes the address information on the first screen layout file 34 and the encrypted address information on the second screen layout file 36 into the memory unit 100 by way of the read/write control unit 54 as the RSS registration information. Note that the address information on the first screen layout file 34 is not subjected to encryption processing and thus remains as plain text. This completes the RSS registration.

Though in the above-described example a case is shown where not only the address information on the second screen layout file 36 but also the address information on the first screen layout file 34 is recorded in the recording medium 102, only the address on the second screen layout file 36 may be recorded. In such a case, as the input receiver 50 receives from the user an instruction to register the RSS, the address information acquiring unit 74 reads out the address information on the second screen layout file 36 from the recording medium 102 and the access address determining unit 124 determines the address information on the second screen layout file 36 to be the access address. The access address determining unit 124 conveys the address information to the communication control unit 60, and the communication control unit 60 accesses the second screen layout file 36 of the information providing server 20 via the communication interface 66. As a result, the RSS file as shown in FIG. 7 is sent, as described above, from the information providing server 20, so that the communication terminal apparatus 10 can process the RSS registration.

The present invention has been described based upon illustrative embodiments. These exemplary embodiments are intended to be illustrative only and it will be obvious to those skilled in the art that various modifications to the combination of constituting elements and processes could be developed and that such modifications are also within the scope of the present invention.

The information providing system 1 can also be used for the case where photos are posted and shared among friends via an SNS (Social Network Service) or the like. Each user has his/her own account and participates in the SNS. In the SNS, friendships may be established and registered among the users, and each user's photos can be viewed among them who have registered the friendships. The photos are not allowed to be seen by users who have not registered the friendships.

In this SNS environment, the first screen layout file 34 may be a file used for "photo album pages of user A", for instance, and a link to an RSS page (second screen layout file 36) is contained in the first screen layout file 34. Assume herein that the "photo album pages of user A" can be viewed among only user A and users who have registered a friendship with user A.

If user B, who is not logged in, accesses the "photo album pages of user A", the information providing server 20 will direct him/her to a log-in screen by the information providing server 20. User B enters his/her user ID and password onto the log-in screen. If authentication is successful, whether a friendship between user B and user A has been registered or not will be determined by the information providing server 20.

If the friendship with user A is registered, user B will be led to user A's photo album pages by the information providing server 20. Thus user B can view the photo album of user A and also register the RSS page that describes the address information of the photos. If, on the other hand, the friendship with user A is not registered, user B will be denied the access to the photo album pages by the information providing server 20 even if he/she logs in. As a result, user B cannot view the photo album of user A.

In such an information providing system 1 as described above, a user cannot view the photo album of user A unless the friendship with user A is registered, even though the encrypted address information on the RSS pages is distributed to the general public. As explained in the exemplary embodiments, the encrypted information on the RSS pages cannot be decoded using the device IDs of other users. Thus, though each of the other users needs to access the address of the first screen layout file 34, he/she cannot even access the first screen layout file 34 unless the friendship between him/her and user A is registered. By employing the information providing system 1 that realizes such an SNS environment as described above, an arrangement and structure that allow a data file for private use to be disclosed to reliable users only are provided.

### [Industrial Applicability]

The present invention provides a technology that realizes a limitation on accesses to a data file.

## Claims

1. A terminal apparatus to be connected to an information providing server on a network, the apparatus comprising:
an acquisition unit which acquires address information on a first screen layout file for generating an initial page used to shift to a selection page of a data file and address information on a second screen layout file for generating the selection page of a data file;
an encryption processor which encrypts the address information on the second screen layout file by using identification information on the terminal apparatus; and
a memory unit which stores the address information on the first screen layout file and the encrypted address information on the second screen layout file.

2. A terminal apparatus according to Claim 1, further comprising:
a decoding processor which decodes the address information on the second screen layout file read out from the memory unit by using the identification information on the terminal apparatus;
an input receiver which receives a request for access to the second screen layout file from a user;
an access address determining unit which determines, as an address to be accessed, either the address information on the first screen layout file or the address information on the second screen layout file according to a result of decoding by the decoding processor;
a communication control unit which accesses the determined access address;
a screen generator which generates a display screen based on the screen layout file received by the communication control unit; and
a screen display unit which displays the generated screen.

3. A terminal apparatus according to Claim 2, wherein when the decoding processor succeeds to decode the information address, the access address determining unit determines the address of the second screen layout file to be the access address, and
when the decoding processor fails to decode the information address, the access address determining unit determines the address of the first screen layout file to be the access address.

4. A terminal apparatus according to Claim 3, wherein the acquisition unit acquires the address information on the first screen layout file to be stored by the memory unit in such a manner that the communication control unit receives the second screen layout file that contains the address information on the first screen layout file and address information on one or more data files.

5. A terminal apparatus to be connected to an information providing server on a network, the apparatus comprising:
an acquisition unit which acquires address information on a first screen layout file for generating an initial page used to shift to a selection page of a data file and encrypted address information on a second screen layout file for generating the selection page of a data file;
a memory unit which stores the address information on the first screen layout file and the encrypted address information on the second screen layout file;
a decoding processor which decodes the address information on the second screen layout file read out from the memory unit by using identification information on the terminal apparatus;
an input receiver which receives a request for access to the second screen layout file from a user;
an access address determining unit which determines the address information on the first screen layout file as an address to be accessed, when the decoding processor fails to decode the address information;
a communication control unit which accesses the determined access address;
a screen generator which generates a display screen based on the screen layout file received by the communication control unit; and
a screen display unit which displays the generated screen.

6. A terminal apparatus according to Claim 5, wherein the acquisition unit acquires the address information on the first screen layout file and the encrypted address information on the second screen layout file from another terminal apparatus.

7. A terminal apparatus according to any one of Claim 2 to Claim 5, wherein when the communication control unit receives the first screen layout file by accessing the first screen layout file and the input receiver receives, from the user, a predetermined input for the initial page displayed on the screen display unit, the communication control unit accesses the second screen layout file that contains the address information on one or more data files.

8. A terminal apparatus according to Claim 7, wherein when the input receiver receives, from the user, a data file selection input for the selection page of a data file displayed on the screen display unit, the communication control unit accesses a selected data file.

9. A terminal apparatus according to any one of Claim 2 to Claim 8, wherein the screen generator generates the display screen in such a manner that the address information on the second screen layout file is not displayed thereon.

10. A terminal apparatus according to any one of Claim 2 to Claim 9, wherein the screen generator generates the display screen in such a manner that the address information on the data file is not displayed thereon.

11. An information providing system comprising a terminal apparatus and an information providing server connected via a network, the information providing server including:
a storage which stores a first screen layout file for generating an initial page used to shift to a selection page of a data file, a second screen layout file for generating the selection page of a data file, and one or more data files; and
a first communication control unit which transmits a file to the terminal apparatus from the storage according to an access from the terminal apparatus, and
the terminal apparatus including:
a memory unit which stores the address information on the first screen layout file and the encrypted address information on the second screen layout file;
a decoding processor which decodes the address information on the second screen layout file read out from the memory unit by using identification information on the terminal apparatus;
an input receiver which receives a request for access to the second screen layout file from a user;
an access address determining unit which determines the address information on the first screen layout file as an address to be accessed, when the decoding processor fails to decode the address information; and
a second communication control unit which accesses the determined access address.

12. A method for accessing a file in an information providing server from a terminal apparatus, the method comprising:
acquiring address information on a first screen layout file for generating an initial page used to shift to a selection page of a data file;
acquiring address information on a second screen layout file for generating the selection page of a data file;
encrypting the address information on the second screen layout file by using identification information on the terminal apparatus;
storing the address information on the first screen layout file and the encrypted address information on the second screen layout file in a memory unit;
decoding the address information on the second screen layout file read out from the memory unit by using the identification information on the terminal apparatus;
receiving a request for access to the second screen layout file from a user;
determining, as an address to be accessed, either the address information on the first screen layout file or the address information on the second screen layout file according to a result of the decoding; and
accessing the determined access address.

13. A method for accessing a file in an information providing server from a terminal apparatus, the method comprising:
acquiring address information on a first screen layout file for generating an initial page used to shift to a selection page of a data file;
acquiring encrypted address information on a second screen layout file for generating the selection page of a data file;
storing the address information on the first screen layout file and the encrypted address information on the second screen layout file in a memory unit;
decoding the address information on the second screen layout file read out from the memory unit by using identification information on the terminal apparatus;
receiving a request for access to the second screen layout file from a user;
determining the address information on the first screen layout file as an address to be accessed, when the decoding fails; and
accessing the determined access address.

14. A program executed by a computer in a terminal apparatus that accesses a file of an information providing server, the program including the functions of:
acquiring address information on a first screen layout file for generating an initial page used to shift to a selection page of a data file;
acquiring address information on a second screen layout file for generating the selection page of a data file;
encrypting the address information on the second screen layout file by using identification information on the terminal apparatus;
storing the address information on the first screen layout file and the encrypted address information on the second screen layout file in a memory unit;
decoding the address information on the second screen layout file read out from the memory unit by using the identification information on the terminal apparatus;
receiving a request for access to the second screen layout file from a user;
determining, as an address to be accessed, either the address information on the first screen layout file or the address information on the second screen layout file according to a result of the decoding; and
accessing the determined access address.

15. A program executed by a computer in a terminal apparatus that accesses a file of an information providing server, the program including the functions of:
acquiring address information on a first screen layout file for generating an initial page used to shift to a selection page of a data file;
acquiring encrypted address information on a second screen layout file for generating the selection page of a data file;
storing the address information on the first screen layout file and the encrypted address information on the second screen layout file in a memory unit;
decoding the address information on the second screen layout file read out from the memory unit by using identification information on the terminal apparatus;
receiving a request for access to the second screen layout file from a user;
determining the address information on the first screen layout file as an address to be accessed, when the decoding fails; and
accessing the determined access address.

16. A computer-readable recording medium which records the computer program according to Claim 14 or Claim 15.

17. A data structure of a screen layout file for generating a selection page of a data file, the data structure being such that information on an address to be accessed is stored in a memory unit by a computer and the data structure including:
address information on a screen layout file for generating an initial page, used to shift to the selection page, by a computer;
address information on one or more data files; and
encryption instruction information which instructs to encrypt the address information on the screen layout file for the selection page and have the encrypted address information stored in the memory unit,
wherein when it is determined by the computer that the encryption instruction information is contained, the address information on the screen layout file for the selection file is encrypted and
the encrypted address information and address information on plain text of the screen layout file for the initial page are stored in the memory unit.
